# EUROPÄISCHE PATENTSCHRIFT

(11) **EP 2 933 237 B1**
(45) Veröffentlichungstag und Bekanntmachung des Hinweises auf die Patenterteilung: **04.10.2017**
(21) Anmeldenummer: 15000710.2
(22) Anmeldetag: 11.03.2015
(51) Int. Cl.: C03B 35/24, C03B 13/04, C03B 17/06

(54) **VORRICHTUNG ZUR HERSTELLUNG VON FLACHGLAS**
DEVICE FOR MANUFACTURING FLAT GLASS
DISPOSITIF DE FABRICATION DE VERRE PLAT

(30) Priorität: 12.03.2014 DE 102014003257
(43) Veröffentlichungstag der Anmeldung: 21.10.2015
(73) Patentinhaber: Calsitherm Verwaltungs GmbH, 33175 Bad Lippspringe (DE)
(72) Erfinder: Hölscher, Tobias, 33102 Paderborn (DE); Schneider, Hans-Jürgen, 09600 Oberschöna (DE); Lengen, Axel, 33175 Bad Lippspringe (DE)

(56) Entgegenhaltungen:
- EP-A1- 1 553 061
- WO-A1-02/092523
- DE-A1- 2 160 723
- US-A- 4 171 966
- US-A1- 2006 010 915
- DATABASE WPI Week 198804 9. Dezember 1987 (1987-12-09) Thomson Scientific, London, GB; AN 1988-024294 XP002746772, -& JP S62 283831 A (HOYA CORP) 9. Dezember 1987 (1987-12-09)

## Beschreibung

Die Erfindung betrifft eine Vorrichtung zum kontinuierlichen Herstellen von Flachglas, in der aus einer Schmelzwanne ein zähflüssiges Glasband kalibriert, in einer Förderrichtung auf eine schwach abwärts geneigte bis horizontale Transportbahn aufgegeben wird, auf der es sich abkühlend verfestigt und an dessen anderem Ende eine Fördervorrichtung für das erstarrte Flachglas angeschlossen ist, wobei die Transportbahn eine poröse Deckschicht aufweist, durch die eine Flüssigkeit unter das erstarrende Glasband steigt, dessen Warme aus der Flüssigkeit ein Dampfpolster bildet, auf dem das Glasband berührungslos schwebt, was als sogenanntes Leidenfrost-Phänomen bezeichnet wird.

Eine derartige Vorrichtung ist aus der EP 1 553 061 A1 bekannt. Diese dient insbesondere zur Herstellung dünnen Glases für optische Anzeigetafeln, das zur Vermeidung optischer Fehler langsam erstarren muss und dabei möglichst reibungs- und biegefrei transportiert wird. Die poröse Deckschicht besteht beispielsweise aus hydrophilem Kohlenstoff oder einem Polymermaterial aus natürlichem oder synthetischem Harz oder Metall oder Metalloxid, wie Aluminiumoxid oder Zinkoxid, oder aus einem Nitrit oder Carbid von einem Metall oder von Silizium. Da die Porosität dieser Materialien nur gering ist, kann ein entstehender Dampfüberschuss nicht durch die Deckschicht entweichen, weshalb die Deckschicht quer zur Förderrichtung des Glasbandes durch Nuten unterbrochen ist, was die Versorgung der verbleibenden Deckschichtstreifen aufwendig macht und die Dampfschicht inhomogen macht. Außer der flachen Transportbahn ist auch eine Kalibrierwalze mit einer gleichartigen Deckschicht aus porösem Material zur Abstandhaltung zum Glasband mit einem Dampfpolster offenbart

Weiterhin ist aus der US 7,337,633 B2 eine ähnliche Vorrichtung bekannt. Bei dieser sind in der Förderrichtung die Nuten zwischen den verbleibenden Deckschichtstreifen abnehmend, weit ausgebildet oder die Deckschichtstreifen zunehmend breit ausgebildet, um die unterschiedliche Dampfmenge, die aufgrund des Glastemperaturverlaufs anfällt, möglichst adäquat abzuleiten.

Die Deckschichtstreifen sind gleichmäßig mit Poren versehen oder faserig ausgebildet und schließen jeweils eine Wanne obenseitig ab, die über einen zugehörigen Regler mit einer Flüssigkeit gespeist wird, so dass diese durch die Deckschichtstreifen dampfbildend unter das darüber transportierte Flachglas gefördert wird und dieses zum Schweben bringt.
Es werden Glasmassen mit Temperaturen zwischen 900 °C bis 1200 °C und maximal bei 1400 °C aufgegeben; das erfordert entsprechend beständige Deckschichtenmaterialien.

Weiterhin ist es aus der DE 10 2006 034 431 A1 bekannt, Glasoberflächen alkalihaltiger Gläser beim Abkühlen um den Transformationsbereich durch das Aufbringen von Aluminiumchlorid aus der Dampfphase zu veredeln. Es wird die Festigkeit erheblich gesteigert und die Löslichkeit von Alkalibestandteilen stark verringert. Der wesentliche Nachteil der durch das Aufbringen von Aluminiumchlorid entsteht, ist Korrosion der Glasmaschinenteile aus Metall.

Weiterhin sind aus der EP 0 263 436 B1 als auch der DE 197 06 223 C2 Calciumhydrosilikat Bausteine bekannt, die ein Porenvolumen von über 90 % aufweisen und eine hohe Gaskonvektion als auch Kapillaraktivität aufweisen. Ein Einsatz bis 1100 °C ist vorgesehen.

Andere hochporöse Stoffe sind Calcium-Aluminate gemäß DE 10 2005 052 380 B4 sowie WO 2011/063791 A1, die für noch höhere Temperaturen einsetzbar sind, sowie gemäß EP 2 516 347 B1 Calcium-Silikat-Hydrat, in das Kohlenstoff in Form von Graphit- und/oder Rußpartikeln eingebettet ist und zur Verwendung bei Strang-, Druck- und Formguss geeignet ist und zwar bei Metall- und Glasherstellung. Die Nutzung der kapillaren Eigenschaft und der Gaskonvektion ist nicht vorgesehen; vielmehr wird die äußerst geringe Infiltrierbarkeit von Öl oder Öl-Wasser-Emulsionen genutzt.

Weiterhin ist aus der DE 100 62 187 A1 ein Verfahren und eine Vorrichtung zum Keramisieren des Ausgangsglases einer Glaskeramik bekannt, bei der erweichtes Glas über eine Infrarotstrahlung reflektierende poröse oder perforierte Platte gefördert wird, die von unten so mit einem Gas unter Druck beaufschlagt wird, dass das Glas schwebt, und bei der das Glas obenseitig mit Infrarotstrahlung beaufschlagt wird, um es längere Zeit auf einer Keramisierungstemperatur zu halten. Eine Flüssigkeitszufuhr und Dampferzeugung findet nicht statt. Die Dampftemperatur würde eine zu schnelle Abkühlung des Glases bewirken, so dass keine Keramisierung erreicht würde. Die Platte besteht aus gesintertem Quarzschaum oder kristallisiertem Erdalkali-Fluorid, -Silicat, -Titanat, -Aluminat oder Cordierit, z.B. Cordierit-Sinterglaskeramik. Diese Materialien zeigen keine ausreichende Kapillarität, um ein tragfähiges Dampfpolster zu erbringen. Zudem sind sie in einem aufwendigen Sinterprozess herzustellen.

Weiter ist aus der US 4,171,966 A eine Vorrichtung zur Herstellung von Flachglas einer Dicke von etwa 4 mm bekannt, bei der ein kalibriertes Glasband temperiert aus einer Schmelzzone über eine horizontale Förderbahn geführt wird, die als Deckschicht aus einem porösen keramischen Material besteht und zur Verbesserung der optischen Eigenschaften des Glases untenseitig von geheizter Luft druckbeaufschlagt ist, so dass die Schmelze nur langsam erstarrt, wobei sie über der Deckschicht auf dem heißen Gaskissen schwebt. Der Luftdruck beträgt etwa 10 Torr, so dass 4 mm dickes Glas auch mit Ornamenten oder Drahteinlage produziert werden kann. Die Temperierung der Schmelze kann über ein vorgeschaltetes Bad flüssigen Metalls erfolgen.

Weiterhin ist aus der JP S62283831 A eine Vorrichtung zur Flachglasherstellung bekannt, bei der die Glasschmelze durch einen Kalibrierspalt und anschließend durch Kühlzonen geführt wird, die jeweils aus porösen beidseitig angeordneten Platten bestehen, die von außen mit inertem Gas mit 1 - 4 Atmosphären druckbeaufschlagt werden. Die Porosität der Platten beträgt 20 - 60 %, so dass jeweils zur Schmelze hin ein Gaskissen ausgebildet ist.

Weiterhin ist aus der WO 02/092523 A1 eine Vorrichtung bekannt, in der runde Glaskörper auf einem Gasbett schwebend über einem Körper mit 50 - 60 % Porosität gehalten werden. Der Körper ist aus pyrolisiertem Holz erzeugt, das mit einem Siliziumträger behandelt ist, der zu Siliziumcarbid, -oxid oder -nitirid umgewandelt wird.

Weiterhin ist aus der US 2006/010915 A1 bekannt, geschmolzenes Glas zwischen zwei Kalibrier- und Kühlrollen hindurch zu führen, wobei ein Glasband von etwa 3 mm Dicke erzeugt wird. Die Rollen bestehen aus porösem Material mit 30 - 40% Porosität und aus Sintermetall oder Keramik, nämlich Metalloxiden, -carbiden und/oder- nitriden von Aluminium, Silizium, Zirkon, wie Silizium-Aluminium-dinitrid, oder aus porösem Kohlenstoff. Den Rollen wird innenseitig eine verdampfende Flüssigkeit, insbesondere Wasser, zugeführt, so dass auf der Kontaktfläche zur Glasschmelze ein Dampfpolster entsteht, das im Vergleich zu einer Zufuhr von Druckgas eine sehr effektive Kühlung erbringt. Die nachgeordneten Transportrollen erbringen nur eine geringe optische Qualität des Glases.

Weiterhin ist es aus der DE 2 160 723 A1 bekannt, Glasbehälter, die vom Formen noch heiß sind, mit einer flüssigen, thermisch stabilen, metallorganischen Verbindung zur Steigerung der Bruchfestigkeit zu behandeln und einer Hitzebehandlung zu unterwerfen, dass eine diffuse Reaktionsproduktschicht innerhalb der Glasoberfläche entsteht. Alternativ wird der heiße Behälter bei über 450 °C mit einer flüssigen Metallverbindung behandelt, die sich rasch zersetzt, wobei oberflächlich ein Metalloxidfilm entsteht. Geeignet sind Verbindungen von Zinn und Titan sowie Kobalt, Mangan und Chrom. Zur Erzeugung eines Oberflächenoxids werden bevorzugt Aluminiumchlorid, Eisen-III-chlorid oder Eisen-III-acetylacetonat, insbesondere mit einem Zinntetrachlorid/Isopropanol-Reaktionsprodukt eingesetzt.

Aufgabe der Erfindung ist es, die eingangs bezeichnete Vorrichtung zu verbessern und zu vereinfachen.

Die Lösung besteht darin, dass die Deckschicht 8 der Transportbahn 6 überwiegend aus Erdalkali-Silikat-Hydrat oder Erdalkali-Aluminat-Hydrat, mit einer Porosität von über 60 % besteht, und sie untenseitig für einen Dampfaustritt genutet ist und mit verbleibenden Stegbereichen 12, die quer zur Förderrichtung F verlaufen, die Flüssigkeit 10 kontaktiert und sie kapillaraktiv zur Oberfläche fördert.

Vorteilhafte Ausgestaltungen sind in den Unteransprüchen angegeben.

Eine weitere Teilaufgabe besteht darin, die Eigenschaften des erzeugten Glases zu verbessern.

Diese Teilaufgabe wird dadurch gelöst, dass zumindest in einem Teilbereich der Deckschicht die zu verdampfende Flüssigkeit Wasser und/oder Alkohole mit Zusätzen von Substanzen ist, die in der flüssigen Phase vorliegen und bei erhöhter Temperatur, der Siedetemperatur der Flüssigkeit, die Glaszusammensetzung an der Glasoberfläche verändern, insbesondere hinsichtlich der Oberflächenhärte, Festigkeit, Witterungsbeständigkeit sowie optischer Eigenschaften wie Verminderung der Reflexion vom sichtbarem Licht und Wärmeeinstrahlung. Beispielsweise kann die zu verdampfende Flüssigkeit Aluminiumchlorid enthalten.

Weiterhin ist ein Bausatz zur Nachrüstung vorhandener Flachglasstraßen beansprucht.

Wesentliche Anwendungsgebiete des auf der erfindungsgemäßen Vorrichtung erzeugten Flachglases ist insbesondere die Abdeckung von Sonnenenergiekollektoren, aber auch die Verglasung von Großgewächshäusern sowie Hallen und Fassaden an Gebäuden.
Hierzu wurden bisher Glasdicken von 4 mm vorgesehen, die dank der nun vorzunehmenden Verfestigung auf 2 mm abzusenken ist, was Gewichts-, Material-, Energie- und Kosteneinsparungen erbringt.

Vorteilhaft können vorhandene Flachglasfertigungsanlagen, die heute ausschließlich aus Rollenbahnen bestehen, mit den neuartigen Deckschichten nachgerüstet werden, wobei deren Auswahl nach den jeweiligen Verhältnissen fachmännisch getroffen werden muss und eine Versorgung mit der jeweils benötigten Flüssigkeitsmenge darauf abzustimmen ist, was durch die Auswahl der Dicke und der Porosität geschieht.

Ein großer Vorteil der erfindungsgemäß vorgesehenen kapillaren Deckschichten ist deren Wärmedämmungseigenschaft. Aufgrund der sehr hohen Porosität von 60 % und mehr, vorzugsweise über 80 %, bestehend aus Mikro- und Makroporen, sind geringe Wärmeleitfähigkeiten von 0,04 - 0,3 W/(m•K) gegeben, die die Verdampfung durchtretender Flüssigkeit begünstigt und eine Rückkühlung weitgehend verhindert. Hierin liegt ein erheblicher Vorteil gegenüber der Verwendung der vorbekannten mit Bohrungen versehenen ansonsten massiven Deckschichten aus Metall, Keramik, Kunststoff oder Kohlenstoff.

Es können zur Erleichterung des Dampfdurchtritts durch die Deckschicht untenseitig Nuten quer zur Glasförderrichtung mit begrenzter Tiefe eingebracht sein, so dass die bedampfte Oberfläche geschlossen bleibt und die zwischen die Nuten liegenden Stegbereiche die zugeführte Flüssigkeit kontaktieren und ansaugen.

In Bereichen hohen Dampfanfalls werden zweckmäßig von der Oberfläche der Deckschicht zu den untenseitigen Nuten dünne Bohrungen eingebracht, die die bereits hohe Dampfdurchlässigkeit zusätzlich steigern.

Werden konventionelle Walzglasanlagen mit Kalibrierwalzen umgerüstet, so empfiehlt es sich auch, diese mit einer Verdampfungs-Deckschicht zu belegen, um den direkten Kontakt zur Glasmasse zu unterbinden. Zweckmäßig kommt das gleiche Deckschichtmaterial zum Einsatz. Die zu verdampfende Flüssigkeit wird von innen oder von außen der Deckschicht zugeführt. Auch diese Flüssigkeit wird vorteilhaft mit Zusätzen von Substanzen, die die Glaszusammensetzung an der Glasoberfläche verändern, versetzt.

Das Glasband kann auch von einem Zinnbad einer Floatglaswanne, das eine völlige Gleichverteilung des Flachglases bewirkt, auf die Transportbahn abgezogen werden. Es entsteht so ein Glas sehr hoher optischer Qualität.

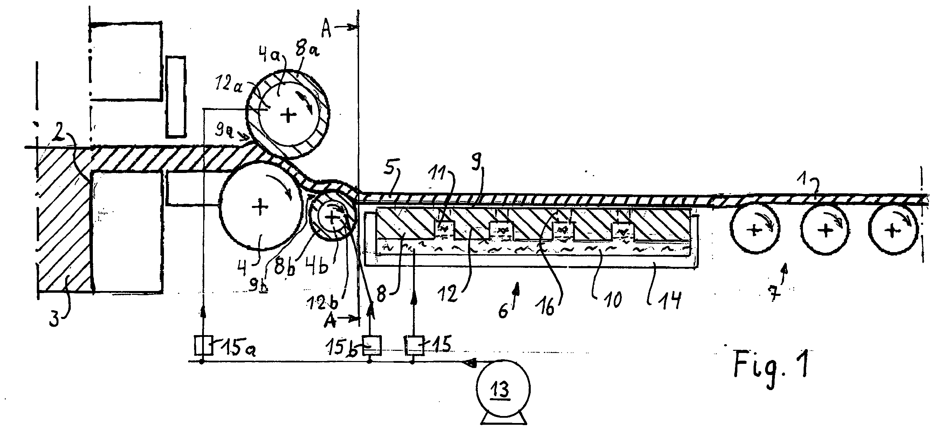

Fig. 1 zeigt beispielhaft eine Walzglasanlage zur Erzeugung von Flachglas. In einer Schmelzwanne 2 wird die Glasmasse 3 aufgeschmolzen, die durch die Kalibrierwalzen 4a, 4b als ein Glasband 5 ausgebracht wird, das über die Transportbahn 6 während der Erstarrungsphase geführt wird, in dem es mit der Rollenfördervorrichtung 7 in der Förderrichtung F abgezogen wird. Die Transportbahn 6 trägt eine Deckschicht 8 über der sich ein Dampfpolster 9 erstreckt auf dem das Glasband 5 schwebt. Die Deckschicht 8 ist hochporös und kapillaraktiv, so dass sie unten Flüssigkeit 10 aufnimmt und zur Oberfläche führt, wo diese durch die Wärme des Glasbandes 5 verdampft.
Im Bereich hoher Glastemperatur, in der viel Dampf anfällt, sind bevorzugt Nuten 11 von unten in die Deckschicht 8 eingeformt, so dass überschüssiger Dampf dort austreten kann. Die zwischen den Nuten 11 verbleibenden Stegbereiche 12 der Deckschicht 8 sorgen kapillar für den Flüssigkeitsnachschub zur Oberfläche. Die Kalibrierwalzen 4a, 4b sind ebenfalls je mit einer porösen Deckschicht 8a, 8b belegt, die vom Innenraum 12a, 12b durch Bohrungen mit Flüssigkeit 10 gespeist wird.

Eine Speisepumpe 13 liefert Wasser und/oder Alkohole 10 mit Zusätzen von Substanzen mit glasoberflächenverändernder Wirkung, z.B. mit Aluminiumchlorid angereichertes Wasser 10 über Mengen- und/oder Pegelregler 15a, 15b, 15c jeweils in die Innenräume 12a, 12b oder Kalibrierwalzen 4a, 4b bzw. in eine Wanne 14, in die die Stegbereiche 12 der Deckschicht 8 hineinragen.
Statt der Versorgung der Kalibrierwalzen 4a, 4b von innen können die porösen Deckschichten 8a, 8b auch in bekannter Weise durch eine Sprüheinrichtung und/oder eine Benetzungswalze mit der Flüssigkeit 10 versorgt werden. Auch ein Besprühen der oberen Glasoberfläche ist vorgesehen.

Der berührungslose Transport der Glasmasse beim Kalibrieren auf dem Dampfpolster 9a, 9b und des Glasbandes 5 während seiner Abkühlung und der Erstarrung auf dem Dampfpolster 9 erbringt ein schlieren- und störstellenfreies Flachglas, welches eben und mit einer Dicke von 2 mm deutlich dünner als bisher ist.

Als Flüssigkeit 10 kommt vorzugsweise Wasser oder eine Lösung von Ethanol und Aluminiumchlorid zum Einsatz, ganz allgemein lässt sich vorteilhaft Wasser und/oder Alkohole 10 mit Zusätzen von Substanzen mit glasoberflächenverändernder Wirkung anwenden.

Im Bereich hohen Dampfanfalls sind Bohrungen 16 oberhalb der Nuten 11 eingebracht.

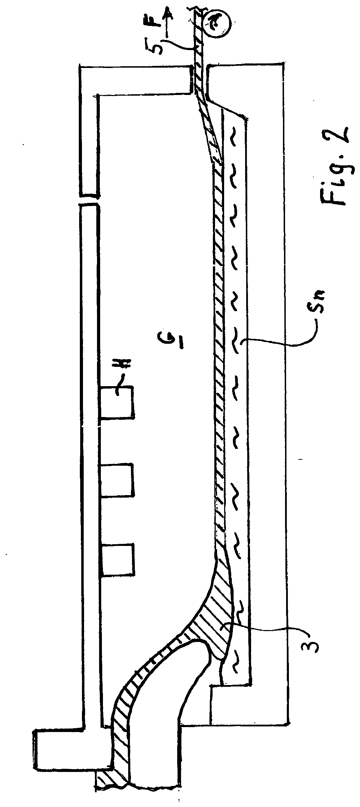

Fig. 2 zeigt eine Floatkammer bekannter Art, die abzugsseitig an eine gemäß Fig. 1 abgebildeten Transportbahn 6 mit der erfindungsgemäßen dampfenden Deckschicht an der Linie A-A anzuschließen ist. In der Kammer wird die Glasmasse 3 auf einem Zinnbad Sn schwimmend durch Heizungen H in einer Schutzgasatmosphäre G heiß und somit viskos gehalten und dabei auf die gewünschte Glasbandbreite und -dicke mittels sogenannter Top Roller gebracht, bis sie als Glasband 5 ausgangsseitig in der Förderrichtung F abgezogen wird, wo die Übergabe erfolgt.

### Liste der Referenzen:

- 1: Flachglas
- 2: Schmelzwanne
- 3: Glasmasse
- 4, 4a, 4b: Kalibrierwalzen
- 5: Glasband
- 6: Transportbahn
- 7: Fördervorrichtung
- 8: Deckschicht auf 6
- 8a, 8b: Deckschicht auf 4a, 4b
- 9: Dampfpolster
- 9a,9b: Dampfpolster auf 4a, 4b
- 10: Flüssigkeit
- 11: Nuten
- 12: Stegbereiche
- 12a, 12b: Innenraum zu 4a, 4b
- 13: Speisepumpe
- 14: Wanne für 10
- 15: Pegel-/Mengenregler zu 14
- 15a, 15 b: Pegel-/Mengenregler zu 4a, 4b
- 16: Bohrungen
- F: Förderrichtung
- G: Schutzgas
- Sn: Zinnbad
- H: Heizung

## Patentansprüche

1. Vorrichtung zum kontinuierlichen Herstellen von Flachglas (1) in der aus einer Schmelzwanne (2) ein zähflüssiges Glasband (5) kalibriert in einer Förderrichtung auf eine schwach abwärts geneigte bis horizontale Transportbahn (6) aufgegeben wird, auf der es sich abkühlend verfestigt und an deren anderem Ende eine Fördervorrichtung (7) für das erstarrte Flachglas (1) angeschlossen ist, wobei die Transportbahn (6) eine poröse Deckschicht (8) aufweist, durch die eine Flüssigkeit (10) unter das erstarrende Glasband (5) steigt, dessen Wärme aus der Flüssigkeit (10) ein Dampfpolster (9) bildet, auf dem das Glasband (5) berührungslos schwebt, wobei überschüssiger Dampf zwischen Deckschichtbereichen seitlich abströmt, **dadurch gekennzeichnet, dass** die Deckschicht (8) der Transportbahn (6) überwiegend aus Erdalkali-Silikat-Hydrat oder Erdalkali-Aluminat-Hydrat, mit einer Porosität von über 60 % besteht, und sie untenseitig für einen Dampfaustritt genutet ist und mit verbleibenden Stegbereichen (12), die quer zur Förderrichtung (F) verlaufen, die Flüssigkeit (10) kontaktiert und sie kapillaraktiv zur Oberfläche fördert.

2. Vorrichtung nach Anspruch 1, **dadurch gekennzeichnet, dass** der Transportbahn (6) eine Schmelzwanne (2) mit einem Zinnbad vorgeschaltet ist, aus dem das Glasband (5) abgezogen wird.

3. Vorrichtung nach Anspruch 1, **dadurch gekennzeichnet, dass** der Transportbahn (6) eine oder mehrere Kalibrierwalzen (4a, 4b) vorgelagert sind, und mindestens eine der Kalibrierwalzen (4a, 4b) eine poröse, kapillaraktive Deckschicht (8a, 8b) aus Erdalkali-Silikat-Hydrat oder Erdalkali-Aluminat-Hydrat trägt, und dass die Kalibrierwalze (4a, 4b) jeweils von innen oder außen mit einer verdampfenden Flüssigkeit (10) beaufschlagt ist und so durch ein Dampfpolster (9a, 9b) von der zähflüssigen Glasmasse (3) beabstandet ist.

4. Vorrichtung nach Anspruch 1, **dadurch gekennzeichnet, dass** die Deckschicht (8) in den genuteten Bereichen von engen Bohrungen (16) durchsetzt ist.

5. Vorrichtung nach einem der vorstehenden Ansprüche, **dadurch gekennzeichnet, dass** eine Speisepumpe (13) die Flüssigkeit (10) niveaugeregelt und/oder mengengeregelt den Stegbereichen (12) zuführt.

6. Vorrichtung nach einem der vorhergehenden Ansprüche, **dadurch gekennzeichnet, dass** die Flüssigkeit Wasser oder ein Wasser-Ethanol-Gemisch ist.

7. Vorrichtung nach Anspruch 6, **dadurch gekennzeichnet, dass** die Flüssigkeit mit einer in der Dampfphase das heiße Glasband oberflächenverändernden Substanz, die dort die Glaszusammensetzung und Glaseigenschaft bezüglich Härte, Festigkeit, Witterungsbeständigkeit sowie optischer Eigenschaften verändert, versetzt ist.

8. Vorrichtung nach Anspruch 7, **dadurch gekennzeichnet, dass** die Substanz Aluminiumchlorid ist.

9. Bausatz zum Ausrüsten einer Vorrichtung zum Herstellen von Flachglas (1) aus einem Glasband (5), das auf einer Transportbahn (6) gefördert wird, zur Montage in der Transportbahn (6) unter dem Glasband (5) bestehend aus einer Deckschicht (8) aus Erdalkali-Silikat-Hydrat oder Erdalkali-Aluminat-Hydrat mit einer Porosität über 60 %, die untenseitig genutet ist und mit dadurch verbleibenden kapillaraktiven Stegbereichen (12) in eine Wanne (14) hineinragt, die mit einer Speisepumpe (13) verbunden ist, die eine Flüssigkeit (10) niveau-oder mengengeregelt fördert.

## Claims

1. Device for continuously manufacturing flat glass (1), in which a semifluid glass sheet (5) is passed from a melting tank (2) in a conveying direction in a calibrated manner to a slightly downwardly inclined to horizontal transport path (6), on which said sheet solidifies by cooling and to the other end of which a conveying device (7) for the rigidified flat glass (1) is connected, the transport path (6) having a porous cover layer (8) through which a liquid (10) rises under the rigidifying glass sheet (5), the heat of which forms from the liquid (10) a steam cushion (9) on which the glass sheet (5) contactlessly floats, excess steam flowing off laterally between cover layer regions, **characterised in that** the cover layer (8) of the transport path (6) predominantly consists of alkaline earth silicate hydrate or alkaline earth aluminate hydrate having a porosity of over 60 %, is grooved on the lower face for steam to escape, and contacts the liquid (10) by way of web regions (12) extending transverse to the conveying direction (F) and conveys it to the surface by capillary action.

2. Device according to claim 1, **characterised in that** a melting tank (2) comprising a tin bath from which the glass sheet (5) is drawn is provided upstream from the transport path (6).

3. Device according to claim 1, **characterised in that** one or more calibration rollers (4a, 4b) are arranged upstream from the transport path (6) and at least one of the calibration rollers (4a, 4b) has a porous, capillary-active cover layer (8a, 8b) made of alkaline earth silicate hydrate or alkaline earth aluminate hydrate, and **in that** each calibration roller (4a, 4b) is acted on from the inside or from the outside by an evaporating liquid (10) and is thus spaced apart from the semifluid glass mass (3) by a vapour cushion (9a, 9b).

4. Device according to claim 1, **characterised in that** the cover layer (8) is passed through by narrow holes (16) in the grooved regions.

5. Device according to any of the preceding claims, **characterised in that** a feed pump (13) supplies the liquid (10) to the web regions (12) at a regulated level or in a regulated amount.

6. Device according to any of the preceding claims, **characterised in that** he liquid is water or a water-ethanol mixture.

7. Device according to claim 6, **characterised in that** a substance which alters the surface of the hot glass sheet in the steam phase is added to the liquid, where it alters the glass composition and glass properties in terms of hardness, strength, weather resistance and optical properties.

8. Device according to claim 7, **characterised in that** the substance is aluminium chloride.

9. Construction kit for equipping a device for manufacturing flat glass (1) from a glass sheet (5) conveyed on a transport path (6), for mounting in the transport path (6) below the glass sheet (5), consisting of a cover layer (8) made of alkaline earth silicate hydrate or alkaline earth aluminate hydrate having a porosity of over 60 %, which is groove on the lower face and protrudes, by way of capillary-active web regions (12) which thus remain, into a tank (14) which is connected to a feed pump (13) which conveys a liquid (10) at a regulated level or in a regulated amount.

## Revendications

1. Dispositif de fabrication en continu de verre plat (1) dans lequel un ruban de verre (5) visqueux calibré provenant d'une cuve de fusion (2) est déposé sur une bande transporteuse (6) légèrement inclinée vers le bas à horizontale dans une direction de transport, où il se solidifie en refroidissant et où un dispositif de transport (7) pour le verre plat (1) solidifié est ajouté à son autre extrémité, dans lequel la bande transporteuse (6) présente une couche de revêtement (8) poreuse, par laquelle un liquide (10) migre sous le ruban de verre (5) solidifié, dont la chaleur forme un matelas de vapeur (9) à partir du liquide (10), sur lequel le ruban de verre (5) flotte sans toucher, dans lequel la vapeur excédentaire s'écoule latéralement entre des domaines de couche de revêtement, **caractérisé en ce que** la couche de revêtement (8) de la bande transporteuse (6) est principalement constituée d'un hydrate de silicate alcalino-terreux ou d'un hydrate d'aluminate alcalino-terreux avec une porosité supérieure à 60 %, et elle est rainurée sur la face inférieure pour une évacuation de la vapeur et est en contact avec le liquide (10) par des domaines formant des passerelles (12) résiduels qui s'étendent perpendiculairement par rapport à la direction de transport (F), et la transportent par capillarité vers la surface.

2. Dispositif selon la revendication 1, **caractérisé en ce qu'**une cuve de fusion (2), à partir de laquelle le ruban de verre (5) est prélevé, avec un bain d'étain est placée devant la bande transporteuse (6),.

3. Dispositif selon la revendication 1, **caractérisé en ce qu'**un ou plusieurs rouleaux de calibrage (4a, 4b) sont logés avant la bande transporteuse (6), et au moins l'un des rouleaux de calibrage (4a, 4b) supporte une couche de revêtement (8a, 8b) poreuse, à capillarité active, en hydrate de silicate alcalino-terreux ou en hydrate d'aluminate alcalino-terreux, et que le rouleau de calibrage (4a, 4b) est soumis respectivement par l'intérieur ou par l'extérieur à un liquide d'évaporation (10) et est ainsi espacé par un matelas de vapeur (9a, 9b) de la masse de verre (3) visqueuse.

4. Dispositif selon la revendication 1, **caractérisé en ce que** la couche de revêtement (8) est traversée dans les domaines rainurés par des passages percés (16) étroits.

5. Dispositif selon l'une des revendications précédentes, **caractérisé en ce qu'**une pompe d'alimentation (13) alimente le liquide (10) avec un réglage du niveau et/ou de la quantité vers les domaines en forme de passerelles (12).

6. Dispositif selon l'une des revendications précédentes, **caractérisé en ce que** le liquide est de l'eau ou un mélange eau-éthanol.

7. Dispositif selon la revendication 6, **caractérisé en ce que** le liquide est déplacé avec une substance modifiant la surface du ruban de verre chaud en phase vapeur, qui modifie à cet endroit la composition de verre et les propriétés du verre en ce qui concerne la dureté, la résistance, la résistance aux intempéries, ainsi que les propriétés optiques.

8. Dispositif selon la revendication 7, **caractérisé en ce que** la substance est du chlorure d'aluminium.

9. Kit d'équipement d'un dispositif de fabrication de verre plat (1) constitué d'un ruban de verre (5), qui est transporté sur une bande transporteuse (6), pour le montage dans la bande transporteuse (6) en dessous du ruban de verre (5) constitué d'une couche de revêtement (8) à base d'hydrate de silicate alcalino-terreux ou d'hydrate d'aluminate alcalino-terreux avec une porosité supérieure à 60 %, qui est rainurée sur la face inférieure et pénètre par des domaines en forme de passerelles (12) résiduels actifs par capillarité dans une cuve (14), qui est reliée avec une pompe d'alimentation (13) qui transporte un liquide (10) avec un réglage du niveau et/ou de la quantité.
